# EUROPÄISCHE PATENTSCHRIFT

(11) **EP 3 765 749 B1**
(45) Veröffentlichungstag und Bekanntmachung des Hinweises auf die Patenterteilung: **28.01.2026**
(21) Anmeldenummer: 19711294.9
(22) Anmeldetag: 12.03.2019
(51) Int. Cl.: F04D 17/10, F04D 25/06, F04D 29/42

(54) **ELEKTRISCHE ANTRIEBSMASCHINE FÜR EINEN VERDICHTER UND/ODER EINE TURBINE**
ELECTRIC PRIME MOVER FOR A COMPRESSOR AND/OR A TURBINE
MOTEUR ÉLECTRIQUE POUR UN COMPRESSEUR ET/OU UNE TURBINE

(30) Priorität: 15.05.2018 DE 102018207496
(43) Veröffentlichungstag der Anmeldung: 20.01.2021
(73) Patentinhaber: Robert Bosch GmbH, 70442 Stuttgart (DE)
(72) Erfinder: BAEUERLE, Michael, 71735 Eberdingen (DE); BRANDT, Martin, 74343 Sachsenheim (DE); AURACHER, Maximilian, 83737 Irschenberg (DE)
(86) Internationale Anmeldenummer: PCT/EP2019/056132
(87) Internationale Veröffentlichungsnummer: WO 2019/219268

(56) Entgegenhaltungen:
- EP-A2- 1 416 123
- DE-A1- 102015 209 365
- FR-A1- 3 048 022
- US-A- 4 946 348

## Beschreibung

### Stand der Technik

Aus dem Stand der Technik sind verschiedene elektrische Antriebsmaschinen und Turbolader bekannt. So offenbart beispielsweise die DE 10 2014 210 451 A1 einen Turbolader mit einer integrierten elektrischen Antriebsmaschine. Turbolader, insbesondere Abgasturbolader, werden insbesondere im Kraftfahrzeugbau dazu genutzt, die Luftfüllung in Zylindern einer Brennkraftmaschine zu erhöhen, um die Leistung der Brennkraftmaschine zu steigern. Häufig werden dazu Abgasturbolader eingesetzt, die vom Abgasstrom der Brennkraftmaschine angetrieben werden.

Darüber hinaus ist es bekannt, einen Turbolader elektromotorisch zu unterstützen, sodass unabhängig von einem Abgasstrom der Brennkraftmaschine angesaugte Frischluft verdichtet und der Brennkraftmaschine mit erhöhtem Ladedruck zugeführt werden kann. Auch eine Kombination beider Varianten ist bereits bekannt. Dabei wird ein Abgasturbolader mit einer elektrischen Antriebsmaschine versehen, um die Welle des Abgasturboladers, auf welcher ein Verdichterrad sowie ein Turbinenrad drehfest angeordnet sind, anzutreiben. Hierdurch kann beispielsweise der ansonsten zeitlich verzögerte Ladedruckaufbau maßgeblich beschleunigt werden.

Eine derartige elektrische Antriebsmaschine weist üblicherweise einen Stator, der zumindest eine mehrphasige Antriebswicklung zur Erzeugung eines Antriebsmagnetfelds aufweist, und einen Rotor auf. Der Rotor weist einen Permanentmagneten auf und wird drehfest auf der Welle des Abgasturboladers angeordnet. Die Realisierung der elektromotorischen Unterstützung durch eine elektrische Antriebsmaschine hat den Vorteil, dass die motorische Unterstützung besonders bauraumsparend in den Turbolader integrierbar ist. Durch Bestromen der Phasen der Antriebswicklung mittels einer dafür vorgesehenen Leistungselektronik wird das drehende Antriebsmagnetfeld erzeugt, durch welches der durch die Welle drehbar gelagerte Rotor mit einem vorgebbaren Drehmoment angetrieben wird. Der Permanentmagnet wirkt dabei mit dem drehenden Magnetfeld zusammen.

Trotz der Vorteile der aus dem Stand der Technik bekannten elektrischen Antriebsmaschinen bewirkten Vorteile beinhalten diese noch Verbesserungspotenzial. So ist es eine Herausforderung, den Wirkungsgrad des Verdichters zu erhöhen, um die Effizienz des Turboladers zu steigern und eine Verbesserung des Wirkungsgrads des Gesamtsystems zu erzielen.

Aus der FR 3 048 022 A1 ist ein Verdichter mit einer elektrischen Antriebsmaschine bekannt, wobei die elektrische Antriebsmaschine einen Rotor, und einen Stator umfasst, wobei der Stator eine Leiteinheit zur Führung eines durch die elektrische Antriebsmaschine strömenden Fluids aufweist, wobei die Leiteinheit ein Rohrelement und einen koaxial zu dem Rohrelement angeordneten Zentralkörper sowie eine Mehrzahl von Haltestreben umfasst. Im Betrieb strömt Fluid zwischen dem Rohrelement und dem Zentralkörper an den Haltestreben vorbei in Richtung des Verdichters. Die Haltestreben weisen ein Profil auf, wobei eine Profilsehne des Profils und die Achse des Stators einen Anstellwinkel einschließen.

### Offenbarung der Erfindung

Es wird ein Verdichter vorgeschlagen, umfassend ein Gehäuse, eine in dem Gehäuse drehbar gelagerte Welle, auf welcher zumindest ein Verdichterrad drehfest angeordnet ist, und eine elektrische Antriebsmaschine, insbesondere für einen Abgasturbolader einer Brennkraftmaschine. Die elektrische Antriebsmaschine umfasst einen Rotor, umfassend mindestens einen Permanentmagneten und einen Stator. Der Stator weist ein kreisringförmiges Statorjoch und zumindest eine mehrphasige Antriebswicklung zur Erzeugung eines Antriebsmagnetfelds sowie eine Mehrzahl von radial bezüglich einer Achse des Stators angeordneten Statorzähnen auf. Die mehrphasige Antriebswicklung weist Spulen auf, die auf jedem der Statorzähne radial angeordnet sind. Der Stator weist weiterhin eine Leiteinheit zur Führung eines durch die elektrische Antriebsmaschine strömenden Fluids auf, wobei die Leiteinheit ein Rohrelement und einen koaxial zu dem Rohrelement angeordneten Zentralkörper sowie eine Mehrzahl von Haltestreben umfasst, wobei die Haltestreben sich von dem Zentralkörper radial bezüglich der Achse des Stators nach außen erstrecken und den Zentralkörper mit dem Rohrelement verbinden. Der Zentralkörper weist eine Öffnung auf, welche den Rotor aufnimmt. Das strömende Fluid strömt zwischen dem Rohrelement und dem Zentralkörper an den Haltestreben vorbei in Richtung des Verdichters, wobei die Haltestreben ein Profil aufweisen, wobei eine Profilsehne des Profils der Haltestreben und die Achse des Stators einen Anstellwinkel α einschließen, mit 0° < α ≤ 40°. Erfindungsgemäß sind kreisringförmige Statorjoch und die Spulen außerhalb des Rohrelementes an den Statorzähnen angeordnet und der Anstellwinkel α ändert sich in radiale Richtung von der Achse des Stators nach außen.

Dadurch werden die Nachteile bekannter elektrischer Antriebsmaschinen zumindest weitgehend vermieden und der Wirkungsgrad des Verdichters erhöht, um die Effizienz des Turboladers zu steigern und eine Verbesserung des Wirkungsgrads des Gesamtsystems zu erzielen.

Unter einer "elektrischen Antriebsmaschine" ist im Rahmen der vorliegenden Erfindung grundsätzlich eine beliebige Vorrichtung zu verstehen, die eingerichtet ist, um eine Bewegung, beispielsweise eine Rotationsbewegung, eines anderen Objekts zu generieren, insbesondere durch ein Anlegen eines elektrischen Stroms. Insbesondere kann die elektrische Antriebsmaschine ganz oder teilweise als Elektromotor ausgestaltet sein. Insbesondere kann die elektrische Antriebsmaschine eingerichtet sein, elektrische Energie in Bewegungsenergie umzuwandeln. Die elektrische Antriebsmaschine weist hierfür mindestens einen Rotor und mindestens einen Stator auf. Die elektrische Antriebsmaschine wird verwendet, um einen Verdichter, insbesondere für einen Abgasturbolader einer Brennkraftmaschine, anzutreiben.

Unter einem "Verdichter" ist im Rahmen der vorliegenden Erfindung grundsätzlich eine beliebige Vorrichtung zu verstehen, welche eingerichtet ist, einem Fluid, beispielsweise einem Gas, mechanische Arbeit zuzuführen. Der Verdichter kann insbesondere eingerichtet sein, einen Druck und eine Dichte des Fluids zu erhöhen. Der Verdichter kann daher beispielsweise auch als Kompressor bezeichnet werden. Insbesondere kann der Verdichter ein Radialverdichter sein. Der Radialverdichter kann eingesetzt sein, um durch einen rotierenden Läufer, beispielsweise ein Verdichterrad, nach den Gesetzen der Strömungsmechanik einem strömenden Fluid Energie zuzusetzen. Der Radialverdichter kann derart ausgebildet sein, dass das Fluid im Wesentlichen axial in ein Laufrad, beispielsweise in das Verdichterrad, strömt und anschließend radial, d.h. nach außen, abgelenkt wird. Insbesondere kann das Fluid beispielsweise durch die nach außen abgelenkte Strömungsrichtung verdichtet oder komprimiert werden.

Unter einem "Rotor" ist im Rahmen der vorliegenden Erfindung ein rotierendes Bauteil einer elektrischen Antriebsmaschine, wie beispielsweise einem Elektromotor, zu verstehen, das alternativ auch als Läufer bezeichnet wird. Der Rotor weist zweckmäßigerweise zumindest einen Permanentmagneten auf, der mit einem drehenden Magnetfeld des Stators zusammenwirkt. Insbesondere ist der Rotor beispielsweise drehfest mit dem Verdichterrad verbunden.

Unter einem "Stator" ist im Rahmen der vorliegenden Erfindung ein feststehendes Bauteil einer elektrischen Antriebsmaschine, wie beispielsweise einem Elektromotor, zu verstehen, das als gemeinsamer Kern für Induktionsspulen dient. Der Stator verfügt über ein kreisringförmiges Statorjoch, wobei die Statorzähne von dem Statorjoch radial nach innen vorstehen und in Umfangsrichtung gesehen beabstandet voneinander gleichmäßig verteilt angeordnet sein können. Die Statorzähne sind von einer mehrphasigen Antriebswicklung umwickelt. Die mehrphasige Antriebswicklung des Stators besteht aus mehreren Spulen, wobei auf jedem Statorzahn jeweils eine Spule radial angeordnet ist. Zum Beispiel können die Spulen auf den Statorzähnen jeweils mittels einer Spulenhalterung angebracht sein. Insbesondere kann durch Bestromen der Phasen der Antriebswicklung, mittels einer dafür vorgesehenen Leistungselektronik, beispielsweise ein drehendes Antriebsmagnetfeld erzeugt werden, durch welches der Rotor mit einem vorgebbaren Drehmoment angetrieben werden kann.

Der Stator umfasst, wie oben beschrieben, weiterhin die Leiteinheit zur Führung eines durch die elektrische Antriebsmaschine strömenden Fluids, beispielsweise Luft, insbesondere Umgebungsluft beispielsweise Ansaugluft einer Brennkraftmaschine. Die Leiteinheit des Stators kann insbesondere eingerichtet sein, um beispielsweise das durch die elektrische Antriebsmaschine strömende Fluid zu leiten und/oder zu lenken. Insbesondere kann die Leiteinheit beispielsweise das Fluid derart leiten, um eine Anströmung des vorzugsweise nachfolgend angeordneten Verdichterrads zu verbessern. Insbesondere zu diesem Zweck können die Haltestreben der Leiteinheit beispielsweise das Profil aufweisen.

Unter einem "Profil" der Haltestrebe ist im Rahmen der vorliegenden Erfindung eine Kontur, beispielsweise eine Umrisslinie, in einer Ebene orthogonal zu einer hauptsächlichen Erstreckungsrichtung der Haltestrebe zu verstehen. Insbesondere kann das Profil die Kontur eines Querschnitts der Haltestrebe sein, beispielsweise eine Form einer Umfangslinie der Haltestrebe. Beispielsweise kann das Profil der Haltestreben derart ausgestaltet sein, um eine Strömungseigenschaft des Fluids, beispielsweise eine Strömungsrichtung und/oder eine Strömungsgeschwindigkeit, zu beeinflussen. Insbesondere können die Haltestreben ein Tragflächenprofil aufweisen. Beispielsweise kann das Tragflächenprofil der Haltestreben individuell an die gewünschte Strömungseigenschaft angepasst und/oder optimiert sein. Insbesondere kann das Tragflächenprofil der Haltestreben beispielsweise einem NACA-Profil oder einem Eppler-Profil entsprechen.

Beispielsweise können die Haltestreben in Umfangsrichtung zueinander gleichmäßig beabstandet angeordnet sein. Insbesondere können die Haltestreben über den Umfang der Leiteinheit beispielsweise gleichmäßig verteilt angeordnet sein.

Unter einer "Profilsehne" des Profils ist im Rahmen der vorliegenden Erfindung grundsätzlich eine gerade verlaufende Linie, beispielsweise eine gedachte Verbindungslinie, zu verstehen, welche zwei Punkte des Profils miteinander verbindet die den größten Abstand zueinander aufweisen. Insbesondere kann die Profilsehne eine Bezugslinie zur Definition von Winkeln, beispielsweise des Anstellwinkels α, des Profils sein.

Insbesondere kann für den Anstellwinkel α gelten: 0° < α ≤ 30°, beispielsweise 1° ≤ α ≤ 28°, beispielsweise 2° ≤ α ≤ 26°, beispielsweise 3° ≤ α ≤ 24° und/oder beispielsweise auch 4° ≤ α ≤ 22°. Bevorzugt kann für den Anstellwinkel α gelten: 5° ≤ α ≤ 20°, beispielsweise 7 ≤ α ≤ 18°, insbesondere 8 ≤ α ≤ 17°. Besonders bevorzugt kann für den Anstellwinkel α gelten: 9° ≤ α ≤ 16°, beispielsweise 10° ≤ α ≤ 15°. Insbesondere können positive Werte des Anstellwinkels α in positive Drehrichtung des Verdichters, beispielsweise in positive Drehrichtung des Verdichterrads, insbesondere in Richtung eines Vordralls, verstanden werden. Beispielsweise kann bei einer im Uhrzeigersinn gerichteten Drehrichtung des Verdichterrads die Profilsehne des Profils ebenfalls im Uhrzeigersinn gegenüber der Achse des Stators im Anstellwinkel α angeordnet sein.

Der Anstellwinkel α ändert sich in radialer Richtung. Insbesondere kann der Anstellwinkel α in radialer Richtung von der Achse des Stators nach außen variieren, beispielsweise größer oder kleiner werden. Zum Beispiel kann sich ein erster Anstellwinkel α₁ einer ersten Haltestrebe in unmittelbarer Nähe des Zentralkörpers von einem zweiten Anstellwinkel α₂ der ersten Haltestrebe in unmittelbarer Nähe des Rohrelements unterscheiden. Insbesondere kann α₁ ≠ α₂ sein.

Das Profil, insbesondere das Tragflächenprofil, der Haltestreben kann dabei mindestens eine Profilnase, beispielsweise eine Anströmnase oder Anströmkante, sowie eine Profilhinterkante aufweisen. Insbesondere beispielsweise die Profilnase und die Profilhinterkante durch die Profilsehne verbunden sein. Weiterhin kann beispielsweise eine Strömungsrichtung des Fluids von der Profilnase in Richtung der Profilhinterkante verlaufen. Insbesondere kann das Fluid an dem Profil entlang von der Profilnase in Richtung der Profilhinterkante strömen. Beispielsweise kann der Anstellwinkel α des Profils, insbesondere der positive Anstellwinkel α, das Fluid ganz oder teilweise, beispielsweise partiell, in die Drehrichtung des Verdichterrads leiten, beispielsweise umlenken. Insbesondere kann das Profil, beispielsweise das Tragflächenprofil, eine Krümmung, beispielsweise eine Profilkrümmung oder Profilwölbung, aufweisen. Beispielsweise kann die Krümmung, insbesondere die Profilkrümmung oder die Profilwölbung, derart ausgebildet sein, dass eine Strömungsrichtung des Fluids, beispielsweise in Drehrichtung des Verdichterrads, beeinflusst wird. Zum Beispiel kann die Krümmung des Profils das Fluid in Drehrichtung des Verdichters, beispielsweise in positive Drehrichtung des Verdichterrads, leiten, insbesondere lenken.

Das Profil der Haltestreben kann beispielsweise in radiale Richtung konstant sein. Insbesondere kann das Profil der Haltestreben entlang der hauptsächlichen Erstreckungsrichtung der Haltestreben, insbesondere in radiale Richtung bezüglich der Achse des Stators, konstant sein.

Beispielsweise können die Haltestreben einen metallischen Kern aufweisen. Insbesondere kann der metallische Kern beispielsweise ein magnetisierbares Material, beispielsweise Eisen, aufweisen. Beispielsweise können die Haltestreben einen metallischen Kern aufweisen der von einer formgebenden Kunststoffschicht umgeben ist. Beispielsweise kann das Profil durch die Kunststoffschicht geformt sein. Insbesondere kann der metallische Kern der Haltestreben dazu eingerichtet sein, um ein Antriebsmagnetfeld zu verstärken.

Weiterhin kann eine erste Seite des Zentralkörpers entgegen der Strömungsrichtung des Fluids angeordnet, beispielsweise der Strömung des Fluids zugewandt, sein. Insbesondere kann die entgegen der Strömungsrichtung des Fluids angeordnete Seite des Zentralkörpers in einer strömungsoptimierten Form, beispielsweise in Form eines halben Ovoids, ausgebildet sein. Zudem kann eine der ersten Seite gegenüberliegende zweite Seite des Zentralkörpers, insbesondere eine von der Strömung abgewandte, beispielsweise eine in Strömungsrichtung angeordnete, Seite des Zentralkörpers, eine Öffnung, beispielsweise eine zylindrisch geformte Öffnung, aufweisen. Insbesondere kann die Öffnung des Zentralkörpers beispielsweise eingerichtet sein, um den Rotor, vorzugsweise den Rotor mit Permanentmagnet, aufzunehmen.

Das Rohrelement kann mindestens zwei Bereiche aufweisen. Insbesondere kann ein erster Bereich einen konstanten Durchmesser aufweisen. Beispielsweise kann ein zweiter Bereich einen sich ändernden Durchmesser aufweisen. Dabei können insbesondere die Haltestreben mit dem ersten Bereich des Rohrelements verbunden sein. Wohingegen sich beispielsweise der zweite Bereich des Rohrelements entgegen der Strömungsrichtung des Fluids verengen kann.

Insbesondere können die Haltestreben und der Zentralkörper einstückig ausgeführt sein. Beispielsweise können die Haltestreben und der Zentralkörper aus einem Material, beispielsweise einem Kunststoff, gefertigt sein. Alternativ, können auch die Haltestreben und das Rohrelement einstückig ausgeführt sein. Insbesondere können die Haltestreben und das Rohrelement aus einem Material, beispielsweise einem Kunststoff, gefertigt sein.

Insbesondere können der Zentralkörper, die Haltestreben und das Rohrelement einstückig, beispielsweise einteilig, ausgeführt sein. Beispielsweise können der Zentralkörper, die Haltestreben und das Rohrelement, insbesondere das Leitelement, aus einem Material, beispielsweise aus Kunststoff, hergestellt sein.

Weiterhin kann der Stator derart ausgebildet sein, dass beispielsweise mindestens ein erster Statorzahn fluchtend zu mindestens einer ersten Haltestrebe angeordnet ist. Insbesondere können der mindestens eine erste Statorzahn und die mindestens eine erste Haltestrebe einstückig, beispielsweise einteilig, miteinander verbunden sein.

Der Zentralkörper und/oder das Rohrelement können beispielsweise axiale Aufnahmevertiefungen zur Aufnahme jeweils eines Statorzahns aufweisen.

### Vorteile der Erfindung

Der vorgeschlagene Verdichter mit der elektrischen Antriebsmaschine weist im Vergleich zu aus dem Stand der Technik bekannten Vorrichtungen zahlreiche Vorteile auf. Insbesondere kann beispielsweise ein Wirkungsgradabfall eines herkömmlichen Verdichters minimiert und/oder kompensiert werden. Insbesondere kann beispielsweise der Wirkungsgradabfall infolge einer Statorintegration in eine Ansaugseite des Verdichters kompensiert werden. Zum Beispiel können geometrische Merkmale der erfindungsgemäßen Vorrichtungen, insbesondere des Stators, derart optimiert sein, dass der Wirkungsgradnachteil beispielsweise so gering wie möglich ist, insbesondere geringer als bei herkömmlichen Vorrichtungen. Beispielsweise kann ein durch eine ungünstige Anströmung des Verdichterrads, insbesondere ein Anströmfehler, hervorgerufener Wirkungsgradnachteil durch die vorgeschlagenen Vorrichtungen minimiert oder sogar kompensiert werden. Beispielsweise kann der Anströmfehler halbiert werden durch die vorgeschlagenen Vorrichtungen im Vergleich zu herkömmlichen Vorrichtungen. Beispielsweise können die erfindungsgemäßen Vorrichtungen einen maximalen Anströmfehler von 3° aufweisen, im Gegensatz zu einem Anströmfehler von beispielsweise 6° bei aus dem Stand der Technik bekannten Vorrichtungen.

Weiterhin kann der erfindungsgemäße elektrisch angetriebene Verdichter eine größere Leistung, beispielsweise eine bessere Performance, im Vergleich zu aus dem Stand der Technik bekannten Vorrichtungen liefern. Insbesondere kann ein Leistungssteigerung beispielsweise durch eine Vergrößerung eines Querschnitts eines metallischen Kerns, insbesondere eines Eisenquerschnitts, der Haltestreben erreicht werden. Beispielsweise kann der Eisenquerschnitt der erfindungsgemäßen Vorrichtungen größer sein als ein Eisenquerschnitt bekannter Vorrichtungen.

### Kurze Beschreibung der Zeichnungen

Weitere optionale Einzelheiten und Merkmale der Erfindung ergeben sich aus der nachfolgenden Beschreibung bevorzugter Ausführungsbeispiele, welche in den Figuren schematisch dargestellt sind.

Es zeigen
- Figur 1: eine Schnittansicht eines Ausführungsbeispiels eines Verdichters mit einer elektrischen Antriebsmaschine;
- Figur 2A: eine perspektivische Ansicht eines Ausschnitts aus einer Ausführungsform einer elektrischen Antriebsmaschine;
- Figur 2B: eine Schnittansicht einer Ausführungsform einer elektrischen Antriebsmaschine im Bereich des Stators;
- Figuren 3Aund 3B: perspektivische Ansichten eines Stators gemäß einem ersten Ausführungsbeispiel (Figur 3A) und gemäß einem zweiten Ausführungsbeispiel (Figur 3B);
- Figur 4: eine Schnittansicht eines Ausführungsbeispiels einer elektrischen Antriebsmaschine im Bereich des Rotors; und
- Figur 5: einen Graph einer beispielhaften Wirkungsgradsteigerung eines Ausführungsbeispiels einer elektrischen Antriebsmaschine.

### Ausführungsformen der Erfindung

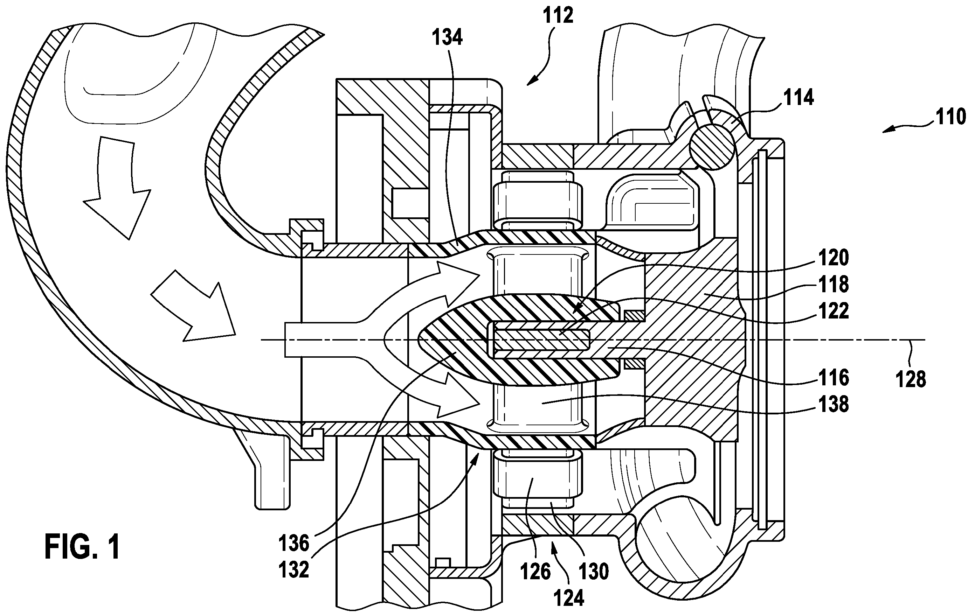

Figur 1 zeigt ein Ausführungsbeispiel eines Verdichters 110, insbesondere eines Abgasturboladers einer Brennkraftmaschine, mit einer elektrischen Antriebsmaschine 112 in einer Schnittansicht. Der Verdichter 110 umfasst dabei ein Gehäuse 114 sowie eine in dem Gehäuse 114 drehbar gelagerte Welle 116. Auf der Welle 116 ist ein Verdichterrad 118, beispielsweise ein Turbinenrad, drehfest angeordnet. Weiterhin ist ein Rotor 120 der Antriebsmaschine 112 ebenfalls drehfest mit der Welle 116 verbunden, welcher mindestens einen Permanentmagneten 122 aufweist. Die Antriebsmaschine 112 umfasst zudem einen Stator 124 mit zumindest einer mehrphasigen Antriebswicklung 126 zur Erzeugung eines Antriebsmagnetfelds sowie eine Mehrzahl von radial bezüglich einer Achse 128 des Stators 124 angeordneten Statorzähnen 130. Der Stator 124 weist weiterhin eine Leiteinheit 132 zur Führung eines durch die elektrische Antriebsmaschine 112 strömenden Fluids auf, wobei die Leiteinheit 132 ein Rohrelement 134, beispielsweise ein mit den Statorzähnen 130 verbundenes Rohrelement 134, und einen koaxial zu dem Rohrelement 134 angeordneten Zentralkörper 136 sowie eine Mehrzahl von Haltestreben 138 umfasst. Eine Fließrichtung des durch die elektrische Antriebsmaschine 112 strömende Fluid ist dabei in Figur 1 beispielsweise durch Pfeile dargestellt.

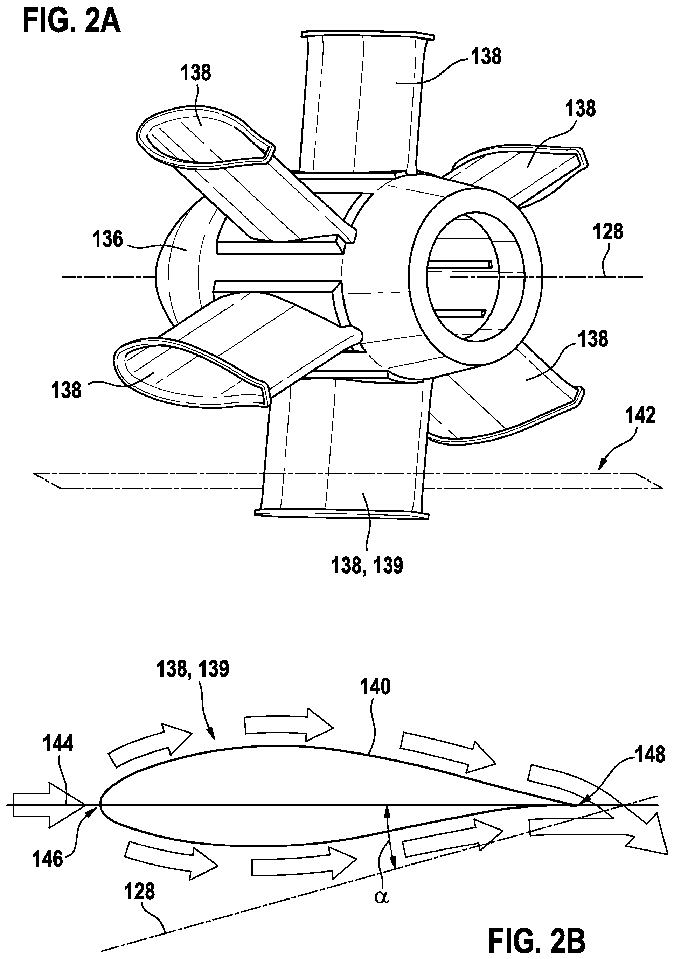

Figur 2A zeigt eine perspektivische Ansicht eines Ausschnitts aus einer Ausführungsform einer elektrischen Antriebsmaschine 112, insbesondere sind der Zentralkörper 136 sowie sechs Haltestreben 138 illustriert. Beispielsweise können die Haltestreben 138 und der Zentralkörper 136 einstückig insbesondere einteilig, beispielsweise aus Kunststoff, ausgeführt sein. Die Haltestreben 138 erstrecken sich, wie in Figur 2A illustriert, von dem Zentralkörper 136 in radiale Richtung bezüglich der Achse 128. Insbesondere können die Haltestreben in Umfangsrichtung zueinander gleichmäßig beabstandet angeordnet sein. Weiterhin weisen die Haltestreben 138 jeweils ein Profil 140, beispielsweise ein Tragflächenprofil, auf. Eine beispielhafte Ausführungsform des Profils 140 ist in Figur 2B illustriert. Insbesondere kann es sich bei dem in Figur 2B dargestellten Profil 140 um eine Kontur eines Querschnitts einer der in Figur 2A illustrierten Haltestreben 138 handeln, wie beispielsweise ein Schnitt entlang einer in Figur 2A illustrierten Ebene 142 orthogonal zu einer hauptsächlichen Erstreckungsrichtung einer ersten Haltestrebe 139. Insbesondere können die Haltestreben 138 beispielsweise in Umfangsrichtung zueinander gleichmäßig beabstandet angeordnet sein. Weiterhin können die Haltestreben 138 beispielsweise einen metallischen Kern aufweisen (hier nicht dargestellt). Beispielsweise können die Haltestreben 138 einen metallischen, beispielsweise einen magnetisierbaren, Kern aufweisen der von einer formgebenden Kunststoffschicht umgeben ist. Beispielsweise kann das Profil 140 durch die Kunststoffschicht geformt sein. Insbesondere kann der metallische Kern der Haltestreben 138 dazu eingerichtet sein, um das durch die mehrphasige Antriebswicklung 126 erzeugte Antriebsmagnetfeld zu verstärken.

Weiterhin sind die Haltestreben 138 beispielsweise gegenüber der Achse 128 des Stators 124 angestellt angeordnet. Wie beispielsweise in Figur 2B illustriert, schließt eine Profilsehne 144 des Profils 140 der ersten Haltestrebe 139 mit der Achse 128 des Stators 124 einen Anstellwinkel α ein, wobei 0° < α ≤ 40°. Beispielsweise kann der Anstellwinkel α = 9° betragen. Insbesondere kann der Anstellwinkel α auch variabel sein (hier nicht dargestellt). Zudem kann das Profil 140, insbesondere das Tragflächenprofil, der Haltestreben 138 beispielsweise eine Profilnase 146, insbesondere eine Anströmkante, und eine Profilhinterkante 148 aufweisen. Insbesondere kann das Profil 140 der Haltestreben 138 eingerichtet sein, um eine Strömungseigenschaft, beispielsweise eine Strömungsrichtung und/oder eine Strömungsgeschwindigkeit, des Fluids zu beeinflussen.

Insbesondere kann das Profil 140 der Haltestreben beispielsweise numerisch optimiert sein, beispielsweise mittels Analyse der numerischen Strömungsmechanik, auch als Computational Fluid Dynamics (CFD) bezeichnet. Beispielsweise kann mit Hilfe von CFD-Analysen eine Strömungsrichtung des Fluids, insbesondere von einströmender Luft, identifiziert werden. Insbesondere kann die Strömungsrichtung des Fluids von der Profilnase 146 in Richtung der Profilhinterkante 148 verlaufen, wie zum Beispiel durch die Pfeile in Figur 2B dargestellt.

Insbesondere kann die Strömungsrichtung des Fluids durch das in Figur 2B mit einem Anstellwinkel α = 9° angestellte Profil 140 der Haltestreben 138 derart beeinflusst werden, dass die Strömungsrichtung des Fluids beispielsweise um maximal 3° von einem optimalen Einströmwinkel des Fluids in ein nachfolgend angeordnetes Verdichterrad abweicht, wie in Tabelle 1 illustriert. Im Gegensatz dazu kann zum Beispiel, wie ebenfalls in der Tabelle 1 illustriert, ein parallel zur Achse 128 ausgerichtetes Profil 140 eine Strömungsrichtung des Fluids derart beeinflussen, dass der Einströmwinkel des Fluids in das Verdichterrad um 6° von dem optimalen Einströmwinkel abweicht.

**Tabelle 1: Einströmwinkel in Abhängigkeit des Anstellwinkels a**

| | Einströmwinkel [°] |
|---|---|
| optimal | -57.19 |
| α = 0° | -62.91 |
| α = 9° | -59.87 |

Das Profil 140 kann je nach Ausführung beispielsweise unterschiedliche Eigenschaften aufweisen. Insbesondere können Tragflächenprofile unterschiedliche Eigenschaften, zum Beispiel Charakteristiken, wie beispielsweise Luftwiderstand, Auftrieb und Flächeninhalt, aufweisen. Insbesondere kann der Luftwiderstand äquivalent zu einem Druckabfall sein. Beispielsweise kann der Auftrieb äquivalent zu einem Drall sein. Der Flächeninhalt kann beispielsweise einen Eisenquerschnitt, insbesondere einen maximalen Eisenquerschnitt, begrenzen. Der Eisenquerschnitt kann insbesondere bei einer Leistung, beispielsweise einer Performance, der elektrischen Antriebsmaschine relevant sein.

Beispielsweise kann bei einer Festlegung oder Bestimmung, insbesondere bei einer Auswahl, des Profils 140, beispielsweise des Tragflächenprofils oder Leitschaufelprofils, ein Zielkonflikt zwischen möglichst geringem Druckverlust bei einer möglichst guten Korrektur des Anströmwinkels des Laufrads aufzulösen sein. Insbesondere kann dieser Zielkonflikt beispielsweise mit dem in Figur 2B illustrierten Profil 140, beispielsweise mit einem Schaufelprofil, erreicht werden, welches beispielsweise eine Laminardelle aufweisen kann. Beispielsweise wird als Laminardelle üblicherweise ein Bereich des Anstellwinkels α bezeichnet, innerhalb dessen der Luftwiderstand annähernd konstant ist und der Auftrieb steigend verläuft. Beispielsweise kann durch eine Wahl des Anstellwinkels α am Rande der Laminardelle zum Beispiel ein Druckverlust gering gehalten werden.

Weiterhin kann eine Form des Profils 140 beispielsweise durch eine Auswertung von Druckabfall und Drall bei beispielsweise gleichzeitiger Analyse des Flächeninhaltes identifiziert werden. Gewünschte Eigenschaften können insbesondere ein möglichst großer Flächeninhalt, ein möglichst geringer Druckabfall, beispielsweise Luftwiderstand, und ein möglichst hoher Drall, beispielsweise Auftrieb, sein. Insbesondere kann ein auf diese Weise identifiziertes Tragflächenprofil ein NACA-Profil sein, wie zum Beispiel ein NACA-Profil der Bezeichnung NACA 64(4)-421 welches beispielsweise auf der Internetseite http://airfoiltools.com gefunden werden kann. Andere Profile 140, insbesondere Tragflächenprofile, wie beispielsweise Eppler-Profile oder individuell an eine gewünschte Strömungseigenschaft angepasste Profile sind ebenfalls möglich.

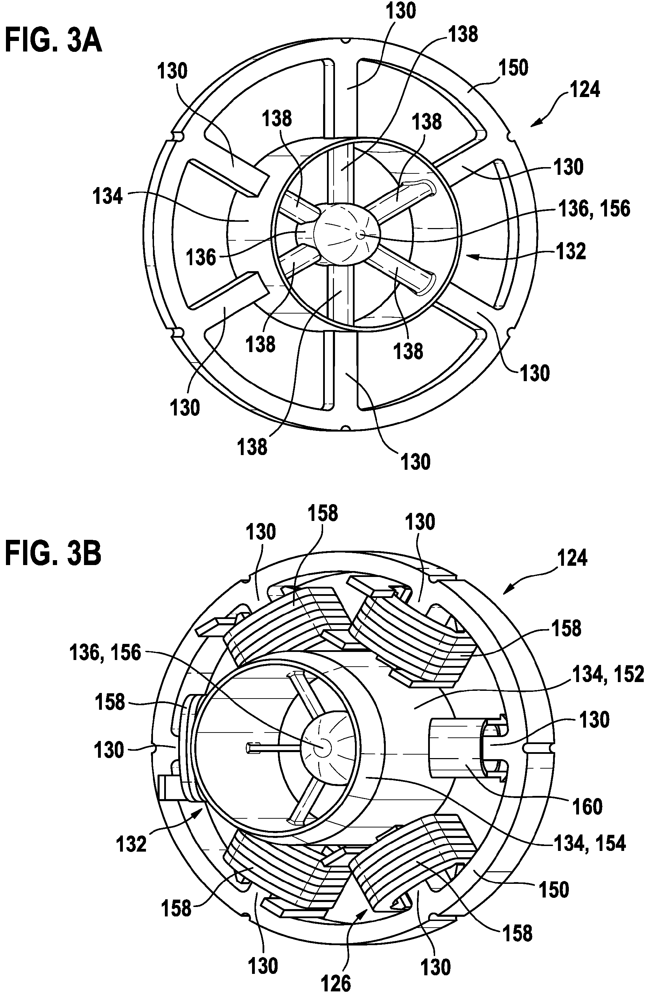

In den Figuren 3A und 3B sind verschiedene Ausführungsbeispiele eines Stators 124 in perspektivischen Ansichten dargestellt. Der Stator 124 kann, wie in den Figuren dargestellt, insbesondere sechs Statorzähne 130, ein kreisringsförmiges Statorjoch 150 sowie eine Leiteinheit 132 zur Führung des durch die elektrische Antriebsmaschine 112 strömenden Fluids, umfassen. Die Leiteinheit 132 kann dabei insbesondere ein Rohrelement 134, ein Zentralkörper 136 sowie beispielsweise sechs Haltestreben 138 aufweisen. Dabei kann, wie in Figur 3B illustriert, das Rohrelement 134 beispielsweise einen ersten Bereich 152 mit einem konstanten Durchmesser und einen zweiten Bereich 154 mit einem sich entgegen der Strömungsrichtung verengenden Durchmesser aufweisen. Weiterhin kann beispielsweise eine der Strömungsrichtung zugewandte erste Seite 156 des Zentralkörpers 136 in einer strömungsoptimierten Form, beispielsweise in Form eines halben Ovoids, ausgebildet sein.

Wie in Figur 3B illustriert, kann die mehrphasige Antriebswicklung 126 des Stators 124 aus mehreren Wicklungen, beispielsweise Spulen 158, bestehen. Insbesondere kann auf jedem der Statorzähne 130 jeweils eine Spule 158 radial angeordnet sein, um die mehrphasige Antriebswicklung 126 zu bilden. Insbesondere können die Spulen 158 auf den Statorzähnen 130 jeweils mittels einer Spulenhalterung 160 angebracht sein.

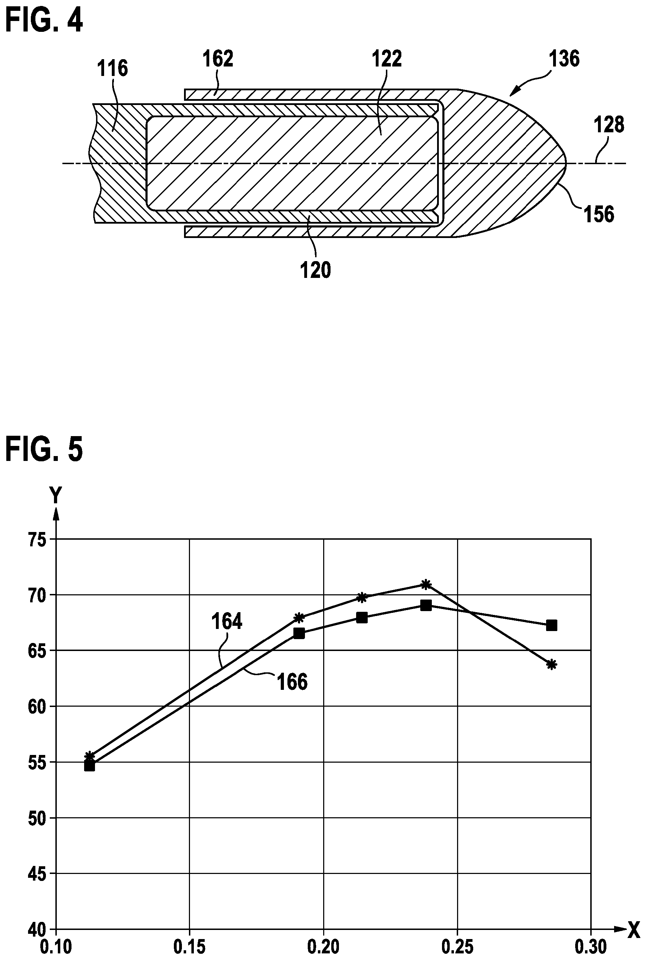

In Figur 4 ist eine Schnittansicht eines Ausführungsbeispiels einer Antriebsmaschine im Bereich des Rotors gezeigt. Beispielsweise kann eine zweite Seite 162 des Zentralkörpers 136 eine Öffnung, beispielsweise eine zylindrisch geformte Öffnung, aufweisen. Insbesondere kann, wie in Figur 4 illustriert, die Öffnung der zweiten Seite 162 des Zentralkörpers 136 dazu eingerichtet sein, um den Rotor 120, beispielsweise den Rotor 120 mit Permanentmagnet 122, aufzunehmen. Der Rotor 120 kann insbesondere drehbar in dem Zentralkörper 136 gelagert sein, so dass sich der Rotor 120 um die Achse 128, insbesondere die Achse 128 des Stators 124, drehen kann. Der Rotor 120 kann dabei drehfest mit der Welle 116 verbunden sein. Beispielsweise können der Rotor 120 und die Welle 116 einstückig oder einteilig ausgeführt sein.

Figur 5 zeigt einen Graph einer beispielhaften Wirkungsgradsteigerung eines Ausführungsbeispiels einer Antriebsmaschine. Insbesondere ist eine Effizienz eines erfindungsgemäßen Verdichters 110 mit einer erfindungsgemäßen elektrischen Antriebsmaschine 112 mittels einer ersten Datenreihe 164 über einem Massenstrom angegeben. Weiterhin ist eine Effizienz eines herkömmlichen Verdichters, beispielsweise ein aus dem Stand der Technik bekannter Verdichter, mittels einer zweiten Datenreihe 166 über einem Massenstrom angegeben. Beispielsweise können die Effizienz in [%] und der Massenstrom in [kg/s] angegeben sein. In dem hier dargestellten Graphen ist die Effizienz auf der Y-Achse aufgetragen und der Massenstrom auf der X-Achse aufgetragen. Insbesondere kann, wie in Figur 5 illustriert, ein erfindungsgemäßer Verdichter 110 mit einer erfindungsgemäßen elektrischen Antriebsmaschine 112 im Vergleich zu aus dem Stand der Technik bekannten Verdichtern je nach Massenstrom beispielsweise eine Verbesserung der Effizienz von bis zu 3 % erreichen.

## Patentansprüche

1. Verdichter (110), umfassend ein Gehäuse (114), eine in dem Gehäuse (114) drehbar gelagerte Welle (116), auf welcher zumindest ein Verdichterrad (118) drehfest angeordnet ist, und eine elektrische Antriebsmaschine (112) , insbesondere für einen Abgasturbolader einer Brennkraftmaschine, wobei die elektrische Antriebsmaschine (112) einen Rotor (120), umfassend mindestens einen Permanentmagneten (122), und einen Stator (124) umfasst, wobei der Stator (124) ein kreisringförmiges Statorjoch (150) und zumindest eine mehrphasige Antriebswicklung (126) zur Erzeugung eines Antriebsmagnetfelds sowie eine Mehrzahl von radial bezüglich einer Achse (128) des Stators (124) angeordneten Statorzähnen (130) aufweist, wobei die mehrphasige Antriebswicklung (126) Spulen (158) aufweist, die auf jedem der Statorzähne (130) radial angeordnet sind, wobei der Stator (124) weiterhin eine Leiteinheit (132) zur Führung eines durch die elektrische Antriebsmaschine (112) strömenden Fluids aufweist, wobei die Leiteinheit (132) ein Rohrelement (134) und einen koaxial zu dem Rohrelement (134) angeordneten Zentralkörper (136) sowie eine Mehrzahl von Haltestreben (138) umfasst, wobei die Haltestreben (138) sich von dem Zentralkörper (136) radial bezüglich der Achse (128) des Stators (124) nach außen erstrecken und den Zentralkörper (136) mit dem Rohrelement (134) verbinden, wobei der Zentralkörper (136) eine Öffnung aufweist, welche den Rotor (120) aufnimmt, wobei das strömende Fluid zwischen dem Rohrelement (134) und dem Zentralkörper (136) an den Haltestreben (138) vorbei in Richtung des Verdichters (110) strömt, wobei die Haltestreben (138) ein Profil (140) aufweisen, wobei eine Profilsehne (144) des Profils (140) der Haltestreben (138) und die Achse (128) des Stators (124) einen Anstellwinkel α einschließen, mit 0° < α ≤ 40°, wobei sich der Anstellwinkel α in radiale Richtung von der Achse (128) des Stators (124) nach außen ändert,
**dadurch gekennzeichnet,**
**dass** das kreisringförmige Statorjoch (150) und die Spulen (158) außerhalb des Rohrelementes (134) an den Statorzähnen (130) angeordnet sind.

2. Verdichter (110) nach dem vorhergehenden Anspruch, wobei die Haltestreben (138) ein Tragflächenprofil aufweisen.

3. Verdichter (110) nach einem der vorhergehenden Ansprüche, wobei für den Anstellwinkel α gilt: 0° < α ≤ 30°.

4. Verdichter (110) nach einem der vorhergehenden Ansprüche, wobei die Haltestreben (138) einen metallischen Kern aufweisen, wobei der metallische Kern von einem Kunststoffmaterial umgeben ist.

5. Verdichter (110) nach einem der vorhergehenden Ansprüche, wobei das Profil (140) der Haltestreben (138) mindestens eine Profilnase (146) und eine Profilhinterkante (148) aufweist, wobei eine Strömungsrichtung des Fluids von der Profilnase (146) in Richtung der Profilhinterkante (148) verläuft.

6. Verdichter (110) nach dem vorhergehenden Anspruch, wobei eine erste Seite (156) des Zentralkörpers (136) entgegen der Strömungsrichtung des Fluids angeordnet ist und in einer strömungsoptimierten Form, beispielsweise in Form eines halben Ovoids, ausgebildet ist, wobei eine der ersten Seite (156) gegenüberliegende zweite Seite (162) des Zentralkörpers (136) eine Öffnung, beispielsweise eine zylindrisch geformte Öffnung, aufweist.

7. Verdichter (110) nach einem der vorhergehenden Ansprüche, wobei das Rohrelement (134) mindestens zwei Bereiche (152, 154) aufweist, wobei ein erster Bereich (152) einen konstanten Durchmesser aufweist, wobei ein zweiter Bereich (154) einen sich ändernden Durchmesser aufweist.

8. Verdichter (110) nach einem der vorhergehenden Ansprüche, wobei die Haltestreben (138) und der Zentralkörper (136) einstückig ausgeführt sind.

9. Verdichter (110) nach einem der vorhergehenden Ansprüche, wobei die Haltestreben (138) und das Rohrelement (134) einstückig ausgeführt sind.

10. Verdichter (110) nach einem der vorhergehenden Ansprüche, wobei der Zentralkörper (136), die Haltestreben (138) und das Rohrelement (134) einstückig ausgeführt sind.

11. Verdichter (110) nach einem der vorhergehenden Ansprüche, wobei mindestens ein erster Statorzahn fluchtend zu mindestens einer ersten Haltestrebe (139) angeordnet ist.

12. Verdichter (110) nach dem vorhergehenden Anspruch, wobei der mindestens eine erste Statorzahn und die mindestens eine erste Haltestrebe (139) einstückig miteinander verbunden sind.

13. Verdichter (110) nach einem der vorhergehenden Ansprüche, wobei der Zentralkörper (136) und/oder das Rohrelement (134) axiale Aufnahmevertiefungen zur Aufnahme jeweils eines Statorzahns (130) aufweisen.

14. Verdichter (110) nach einem der vorhergehenden Ansprüche, wobei der Rotor (120) drehfest mit der Welle (116) verbunden ist.

## Claims

1. Compressor (110), comprising a housing (114), a shaft (116), which is rotatably mounted in the housing (114) and on which at least one compressor wheel (118) is arranged for conjoint rotation, and an electric drive machine (112), in particular for an exhaust gas turbocharger of an internal combustion engine, wherein the electric drive machine (112) comprises a rotor (120), comprising at least one permanent magnet (122), and a stator (124), wherein the stator (124) has a circular stator yoke (150) and at least one multiphase drive winding (126) for generating a drive magnetic field and also a plurality of stator teeth (130) arranged radially with respect to an axis (128) of the stator (124), wherein the multiphase drive winding (126) has coils (158) which are radially arranged on each of the stator teeth (130), wherein the stator (124) further comprises a guiding unit (132) for guiding a fluid flowing through the electric drive machine (112), wherein the guiding unit (132) comprises a pipe element (134) and a central body (136) arranged coaxially to the pipe element (134) and also a plurality of retaining struts (138), wherein the retaining struts (138) extend radially outwards from the central body (136) with respect to the axis (128) of the stator (124) and connect the central body (136) to the pipe element (134), wherein the central body (136) has an opening which receives the rotor (120), wherein the fluid flowing between the pipe element (134) and the central body (136) passes the retaining struts (138) in the direction of the compressor (110), wherein the retaining struts (138) have a profile (140), wherein a profile chord (144) of the profile (140) of the retaining struts (138) and the axis (128) of the stator (124) include an angle of attack α, where 0° α ≤ 40°, wherein the angle of attack α changes in the radial direction from the axis (128) of the stator (124) to the outside, **characterized in that** the circular stator yoke (150) and the coils (158) are arranged outside the pipe element (134) on the stator teeth (130).

2. Compressor (110) according to the preceding claim, wherein the retaining struts (138) have an aerofoil profile.

3. Compressor (110) according to either of the preceding claims, wherein for the angle of attack α: 0° < α ≤ 30°.

4. Compressor (110) according to any of the preceding claims, wherein the retaining struts (138) have a metal core, wherein the metal core is surrounded by a plastics material.

5. Compressor (110) according to any of the preceding claims, wherein the profile (140) of the retaining struts (138) has at least a profile leading edge (146) and a profile trailing edge (148), wherein a flow direction of the fluid runs from the profile leading edge (146) in the direction of the profile trailing edge (148).

6. Compressor (110) according to the preceding claim, wherein a first side (156) of the central body (136) is arranged against the flow direction of the fluid and is designed in a flow-optimized form, for example in the form of a half ovoid, wherein a second side (162) of the central body (136), the second side being situated opposite the first side (156), has an opening, for example a cylindrical opening.

7. Compressor (110) according to any of the preceding claims, wherein the pipe element (134) has at least two regions (152, 154), wherein a first region (152) has a constant diameter, wherein a second region (154) has a changing diameter.

8. Compressor (110) according to any of the preceding claims, wherein the retaining struts (138) and the central body (136) are made in one piece.

9. Compressor (110) according to any of the preceding claims, wherein the retaining struts (138) and the pipe element (134) are made in one piece.

10. Compressor (110) according to any of the preceding claims, wherein the central body (136), the retaining struts (138) and the pipe element (134) are made in one piece.

11. Compressor (110) according to any of the preceding claims, wherein at least one first stator tooth is arranged in alignment with at least one first retaining strut (139).

12. Compressor (110) according to the preceding claim, wherein the at least one first stator tooth and the at least one first retaining strut (139) are connected to each other in one piece.

13. Compressor (110) according to any of the preceding claims, wherein the central body (136) and/or the pipe element (134) have axial receiving recesses for receiving one stator tooth (130) each.

14. Compressor (110) according to any of the preceding claims, wherein the rotor (120) is connected to the shaft (116) for conjoint rotation.

## Revendications

1. Compresseur (110), comprenant un carter (114), un arbre (116) logé rotatif dans le carter (114), sur lequel arbre est agencé de manière solidaire en rotation au moins une roue (118) de compresseur, et une machine d'entraînement électrique (112), en particulier pour un turbocompresseur à gaz d'échappement d'un moteur à combustion interne, la machine d'entraînement électrique (112) comprenant un rotor (120), comprenant au moins un aimant permanent (122), et un stator (124), le stator (124) présentant une culasse (150) annulaire de stator et au moins un enroulement d'entraînement multiphasé (126) destiné à générer un champ magnétique d'entraînement ainsi qu'une multitude de dents (130) de stator agencées radialement par rapport à un axe (128) du stator (124), l'enroulement d'entraînement multiphasé (126) présentant des bobines (158), qui sont agencées radialement sur chacune des dents (130) de stator, le stator (124) présentant en outre une unité conductrice (132) destinée à guider un fluide s'écoulant à travers la machine entraînement électrique (112), l'unité conductrice (132) comprenant un élément tubulaire (134) et un corps central (136) agencé coaxialement par rapport à l'élément tubulaire (134) ainsi qu'une multitude d'entretoises de maintien (138), les entretoises de maintien (138) s'étendant à partir du corps central (136) radialement vers l'extérieur par rapport à l'axe (128) du stator (124) et reliant le corps central (136) à l'élément tubulaire (134), le corps central (136) présentant une ouverture qui reçoit le rotor (120), le fluide qui s'écoule entre l'élément tubulaire (134) et le corps central (136) s'écoulant au-delà des entretoises de maintien (138) en direction du compresseur (110), les entretoises de maintien (138) présentant un profil (140), une corde (144) du profil (140) des entretoises de maintien (138) et l'axe (128) du stator (124) renfermant un angle d'attaque α, où 0° < α ≤ 40°, l'angle d'attaque α se modifiant vers l'extérieur dans la direction axiale de l'axe (128) du stator (124), **caractérisé en ce que** la culasse (150) annulaire de stator et les bobines (158) sont agencées à l'extérieur de l'élément tubulaire (134) au niveau des dents (130) de stator.

2. Compresseur (110) selon la revendication précédente, les entretoises de maintien (138) présentant un profil aérodynamique.

3. Compresseur (110) selon l'une des revendications précédentes, la relation suivante étant d'application pour l'angle d'attaque α : 0° < α ≤ 30°.

4. Compresseur (110) selon l'une des revendications précédentes, les entretoises de maintien (138) présentant un noyau métallique, le noyau métallique étant entouré d'un matériau synthétique.

5. Compresseur (110) selon l'une des revendications précédentes, le profil (140) des entretoises de maintien (138) présentant au moins un nez (146) de profil et un bord de fuite (148) de profil, un sens d'écoulement du fluide s'étendant à partir du nez (146) de profil en direction du bord de fuite (148) de profil.

6. Compresseur (110) selon la revendication précédente, une première face (156) du corps central (136) étant agencée à l'opposé du sens d'écoulement du fluide et étant réalisée sous une forme optimisée pour l'écoulement, par exemple sous la forme d'un demi-ovoïde, une deuxième face (162) du corps central (136) située à l'opposé de la première face (156) présentant une ouverture, par exemple une ouverture de forme cylindrique.

7. Compresseur (110) selon l'une des revendications précédentes, l'élément tubulaire (134) présentant au moins deux zones (152, 154), une première zone (152) présentant un diamètre constant et une deuxième zone (154) présentant un diamètre variable.

8. Compresseur (110) selon l'une des revendications précédentes, les entretoises de maintien (138) et le corps central (136) étant réalisées d'un seul tenant.

9. Compresseur (110) selon l'une des revendications précédentes, les entretoises de maintien (138) et l'élément tubulaire (134) étant réalisés d'un seul tenant.

10. Compresseur (110) selon l'une des revendications précédentes, le corps central (136), les entretoises de maintien (138) et l'élément tubulaire (134) étant réalisés d'un seul tenant.

11. Compresseur (110) selon l'une des revendications précédentes, au moins une première dent de stator étant agencée en alignement avec au moins une première entretoise de maintien (139).

12. Compresseur (110) selon la revendication précédente, ladite au moins une première dent de stator et ladite au moins une première entretoise de maintien (139) étant reliées d'un seul tenant l'une à l'autre.

13. Compresseur (110) selon l'une des revendications précédentes, le corps central (136) et/ou l'élément tubulaire (134) présentant des cavités de réception axiales destinées à recevoir à chaque fois une dent (130) de stator.

14. Compresseur (110) selon l'une des revendications précédentes, le rotor (120) étant relié de manière solidaire en rotation à l'arbre (116).
